# EUROPEAN PATENT SPECIFICATION

(11) **EP 0 558 374 B1**
(45) Date of publication and mention of the grant of the patent: **19.05.1999**
(21) Application number: 93400383.1
(22) Date of filing: 16.02.1993
(51) Int. Cl.: G06F 3/033

(54) **Integrated electronic drawing and printing apparatus**
Integriertes elektronisches Zeichen- und Druckgerät
Appareil électronique intégré pour dessiner et imprimer

(30) Priority: 20.02.1992 JP 32441/92; 04.03.1992 JP 45861/92
(43) Date of publication of application: 01.09.1993
(73) Proprietor: SONY CORPORATION, Tokyo 141 (JP)
(72) Inventor: Tanahashi, Makoto, c/o SONY CORPORATION, Shinagawa-ku, Tokyo (JP)
(74) Representative: Thévenet, Jean-Bruno

(56) References cited:
- DE-A- 3 425 953
- DE-A- 3 722 954
- US-A- 4 728 963
- PATENT ABSTRACTS OF JAPAN vol. 12, no. 34 (P-662)2 February 1988

## Description

### BACKGROUND OF THE INVENTION

### 1.Field of The Invention

The present invention relates to an electronic drawing and printing apparatus in which an electronic drawing device including a digitizing pad is integrated with a printing device.

### 2.Description of The Prior Art

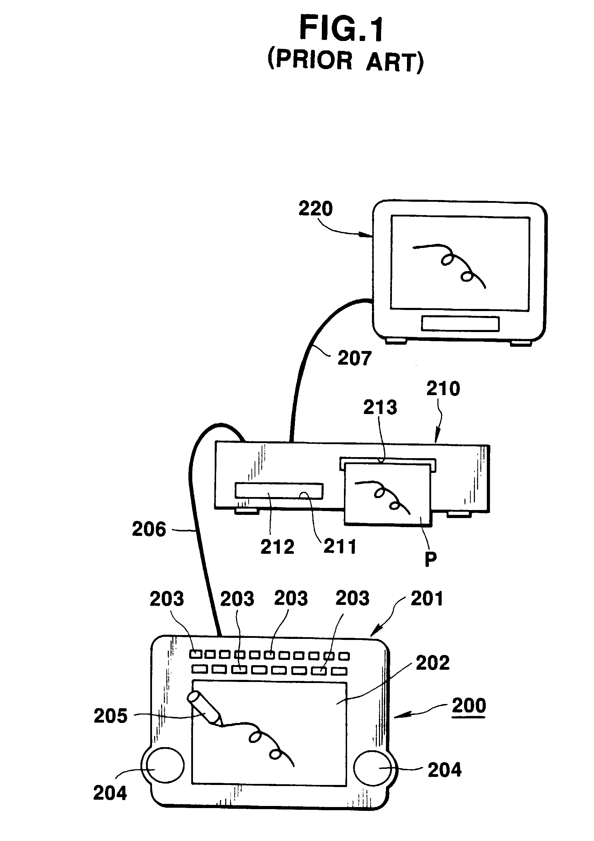

Generally, an electronic drawing operation is accomplished by drawing a picture on a digitizing pad installed in an electronic drawing device by means of a drawing pen. The picture drawn is generally displayed on a CRT monitor, such as a television receiver, and can be printed by a video printer. Conventionally, the electronic drawing device and the printer are connected via a video cable. For example, referring to Fig. 1, an electronic drawing device 200 includes a digitizing pad 202, function keys 203 and drawing switches 204, which are arranged on a main body 201. A reference numeral 205 designates a drawing pen. A video cable 206 connects an analog video output of the main body 201 to an analog video input of a printer 210, and another video cable 207 connects an analog video output of the printer 210 to an analog video input of a monitor 220. By the connections of the cables 206 and 207, an analog video signal of a picture drawn by the drawing device 200 is transferred to the printer 210, and to the monitor 220 via the printer 210. The printer 210 includes a paper supply tray 212 for installing a printing paper P therein and the tray 212 is detachably mounted to a paper entrance 211. The printed printing paper P is ejected out of a paper eject 213. The printer 210 is, for example, an ink melting type thermal transfer printer. As the monitor 220, a conventional television receiver is used, for example.

The electronic drawing device 200 functions as follows.

A picture is drawn on the digitizing pad 202 by means of the drawing pen 205. During drawing, the drawing switch 204 is pressed to input the picture drawn on the pad 202. Selections of Color and line are designated by the function keys 203. The picture drawn is converted to an analog video signal to display an image of the picture on the monitor 220 via the video cables 206 and 207. When printing the image, the printer 210 is manually operated to command printing. Thus, the analog video output of the electronic drawing device 200 is printed out at the printer 210.

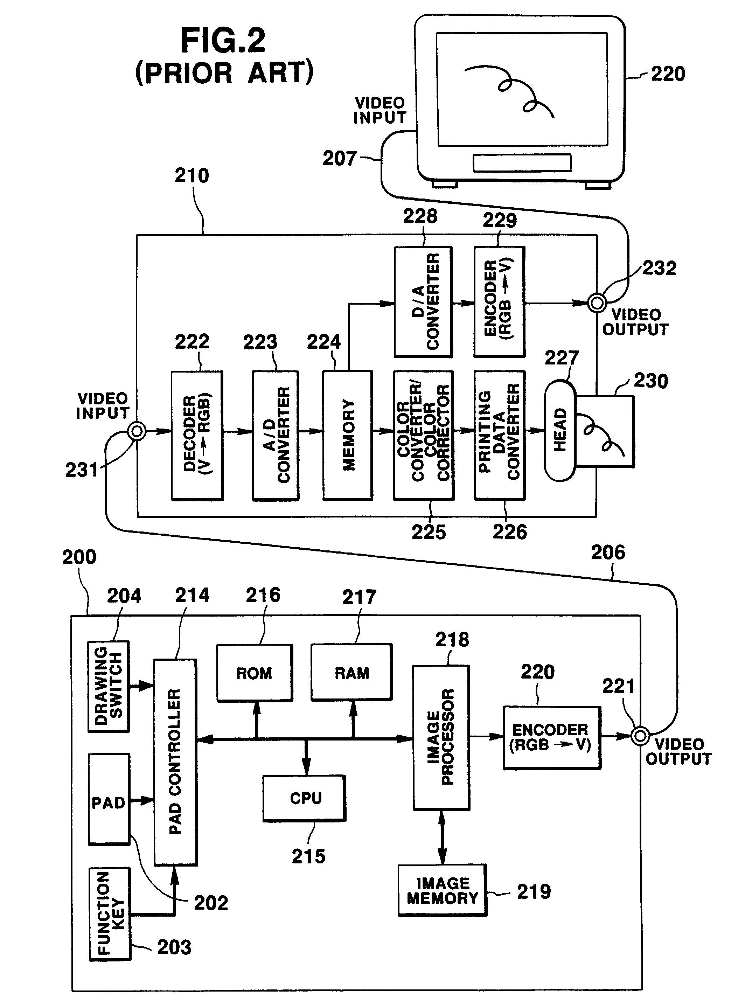

Fig. 2 diagrammatically shows a detailed circuit construction of the aforementioned prior art system. The electronic drawing device 200 is composed of a pad controller 214, CPU (Central processing unit) 215, ROM (Read only memory) 216, RAM (Random access memory) 217, an image processor 218, an image memory 219 connected thereto, an NTSC encoder 220 and an analog video output connector 221, in which all elements are connected to each other via a bus line as shown in Fig. 2. The function keys 203, the drawing switch 204 and the digitizing pad 202 are connected to the pad controller 214. The printer 210 is composed of an RGB decoder 222, an A/D converter 223, an image memory 224, a color converter/color corrector 225, a printing data converter 226, a thermal head 227, a D/A converter 228 and an NTSC encoder 229. A reference numeral 230 designates a printing paper, 231 designates an analog video input connector, and 232 designates an analog video output connector. The analog video output connector 221 of the electronic drawing device 200 is connected to the analog video input connector 231 of the printer 210 via a cable 206. The analog video output connector 232 of the printer 210 is connected to an analog video input connector (not shown) of the monitor 220 via the cable 207.

In operation, the digitizing pad 202 of the electronic drawing device 200 detects a position where the drawing pen 205 presses, then output are signals of X-Y coordinates. The signals are converted at the pad controller 214 to digital data for CPU 215. The pad controller 214 also outputs signals detecting inputs from the function key 203 and the drawing switch 204 toward CPU 215.

For example, if an input from the pad 202 is detected by the pad controller 214, a detecting signal of the input is output toward CPU 215 thereby. The CPU 215 detects the signal output from the pad controller 214, then decodes the contents of the input. If the contents decoded are that of the function key 203, designation corresponding to the key, for example, color designation, is done. If the contents decoded are not that of the function key 203, i.e., that of the drawing switch 204 for drawing the picture, CPU 215 decodes the position of a placement of the pen, then draws a picture according to color designation designated by the function key 203. For example, yellow color and fine line are designated by the function keys 203, the CPU 215 effects processing of drawing a yellow and fine line at the position corresponding to the pad 202 which is pressed. The CPU 215 sends the color data, position data into the image processor 218. The input data are digitized to store in the image memory 219. The image processor 218 reads out the data from the image memory 219 to convert an analog RGB signal, then the analog RGB signals are output toward the NTSC encoder 220. In the encoder 220, the RGB signal is converted to an NTSC color video signal to output toward the video output connector 221. The ROM 216 stores programs, fixed data or such, and the RAM 217 provisionally memorizes variable data and image data.

In the printer 210, the NTSC color video signal from the drawing device 200 supplied through the analog video input connector 231 is again converted to RGB signal by means of the decoder 222. Then, the decoded signals are digitized by the A/D converter 223 to store in the memory 224. The signals are again converted to RGB signal by D/A converter 228, then converted to an NTSC color video signal by the NTSC encoder 229 to output toward the monitor 220 via the analog video output connector 232. When printing command is input, the image data are read from the memory 224 and processed by the color converter/color corrector 225 then output toward the print data converter 226. The thermal head 227 is driven, and a printing operation on the printing paper 230 is started.

The electronic drawing device as the aforementioned is disclosed in a pending patent application USSN 560,783 filed on July 31, 1990 assigned to the same assignee of the present invention.

As the previously mentioned, the printer and the drawing device are separated to an individual apparatus, respectively. Therefore, when the picture drawn by the drawing device 200 is printed, the digital image data must be converted to the analog video signal, i.e., to a composite video signal, to transfer the signal to the printer 210. Furthermore, at the printer 210, the analog video signal transferred must be converted to the digital image data to memorize in the memory 224. The printing operation is done by utilizing this digital image data. Therefore, an image quality of printing is deteriorated by digital to analog conversion of the signal. Additionally, and the circuits for the video signal conversion becomes too complicated to reduce manufacturing cost.

For an example of a prior art apparatus corresponding to the preamble of claim 1, reference may be made to DE-OS-3 722 954.

A color printer apparatus is generally known e.g. from document DE-OS-3 425 953.

### SUMMARY OF THE INVENTION

It is therefore a principal object of the present invention to provide an electronic drawing and printing apparatus without deteriorating image quality of printing.

It is another object of the present invention to provide an electronic drawing and printing apparatus having simple circuit to reduce manufacturing costs.

It is a further object of the present invention to provide an electronic drawing and printing apparatus which is easily operatable.

The apparatus according to the present invention provides a drawing image input portion having picture drawing function and an image memory for storing image data is integrally, arranged with a printing portion to print out the image data.

According to one aspect of the present invention, the electronic drawing and printing apparatus comprises electronic drawing means having manually operatable digitizing means for drawing a picture and generating digital image data of the picture, digital image data control means coupled to said electronic drawing means, printing means coupled to said digital image data control means and installed in the same housing of the electronic drawing means for printing said picture based on said digital image data obtained from said electronic drawing means, characterised in that it further comprises a video port means depending from said housing, signal interface means connected between said image processing means and said video port means for ensuring signal compatibility with a video apparatus connected to said video port means, and in that said digital data control means further comprises a bus for conveying said digital image data signal, said bus providing separate connection to both said printing means and said interface means.

The manually operatable digitizing means of the electronic drawing means may include a digitizing pad having a predetermined drawing area.

The apparatus may further include digital to analog converting means for converting the digital image data into analog video signals suitable for displaying the digital data on a monitor display, analog to digital converting means for converting external analog video signals into digital image data suitable for printing the external analog video signals by the printing means, and image data memory means for storing the digital image data from the electronic drawing means and/or the digital image data from the analog to digital converting means.

The printing means may comprise a printing mechanism portion having a paper entrance in front of the printing mechanism portion and a ribbon cassette entrance at a side wall of the printing mechanism portion.

The printing means may further include print control switch means and print condition display means on top of the printing mechanism portion, a paper exit under the paper entrance and a transparent paper guide inserted between the paper entrance and the paper exit.

The printing mechanism portion of the printing means may include a thermal head having a plurality of heating elements for thermal transfer printing.

The image memory of the electronic drawing means is shared by the printing means.

### BRIEF DESCRIPTION OF THE DRAWINGS

The present invention will be understood more fully from the detailed description given herebelow and from the accompanying drawings of the preferred embodiments of the invention. However, the drawings are not intended to imply limitation of the invention to a specific embodiment, but are for explanation and understanding only.

In the drawings:
Fig. 1 is a schematic drawing of an electronic drawing device and a printer according to prior art;
Fig. 2 is a block diagram of Fig. 1 showing a circuit construction thereof;
Fig. 3 is a schematic drawing of an electronic drawing and printing apparatus according to the present invention;
Fig. 4 is a perspective view if a principal portion of the apparatus of Fig. 3;
Fig. 5 is a plane view of a paper supply guide installed in the apparatus of Figs. 3 and 4;
Fig. 6 is a sectional view taken along lines M-M of Fig. 5;
Fig. 7 is a sectional view taken along lines N-N of Fig. 5;
Fig. 8 is a side view of the apparatus of Figs. 3 and 4 under the paper supplying condition;
Fig. 9 is a side view of the apparatus of Figs. 3 and 4 under the printing condition;
Fig. 10 is a partial plane view of the present invention showing the closed condition of a cover which covers a portion where print control switches are arranged;
Fig. 11 is a partial plane view of the present invention showing the open condition of the cover of Fig. 10;
Fig. 12 is a partial view of the present invention showing the open condition of a cover similar to Fig. 11 but according to another embodiment of the present invention;
Fig. 13 is a block diagram showing a circuit construction of the apparatus according to the present invention; and
Fig. 14 is a flow chart showing operation of the apparatus of Fig. 13.

### DETAILED DESCRIPTION OF THE PREFERRED EMBODIMENT

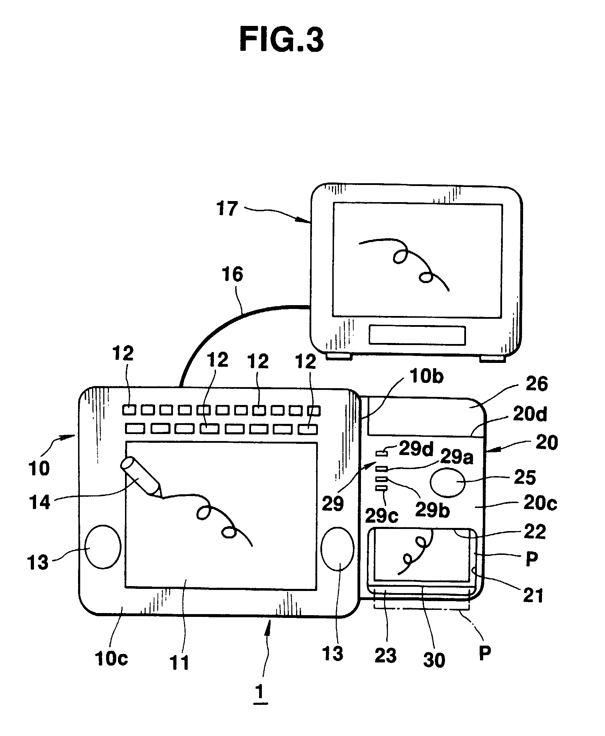

Referring now to Fig. 3, an electronic drawing and printing apparatus 1 of the present invention is shown, and the apparatus 1 includes an electronic drawing portion 10 and a printing portion 20 of melting type thermal transfer printer which is integrally installed with a side surface 10b of the electronic drawing portion 10. A digitizing pad 11, function keys 12, and a drawing switch 13 are arranged on the upper surface 10c of the drawing portion 10 which is inclined downwardly from the rear to the front portion thereof. A reference numeral 14 designates a drawing pen and a reference numeral 16 designates a video cable which connects a video output of the electronic drawing and printing apparatus 1 to a video input of a monitor 17, concurrently, connects a video output of the monitor 17 to a video input of the drawing and printing apparatus 1. Thereby, NTSC color signal output from a picture drawn by the drawing pen 14 on the digitizing pad 11 of the drawing portion 10 is transferred to the monitor 17. The output of the monitor 17 can be transferred to the drawing and printing apparatus 1.

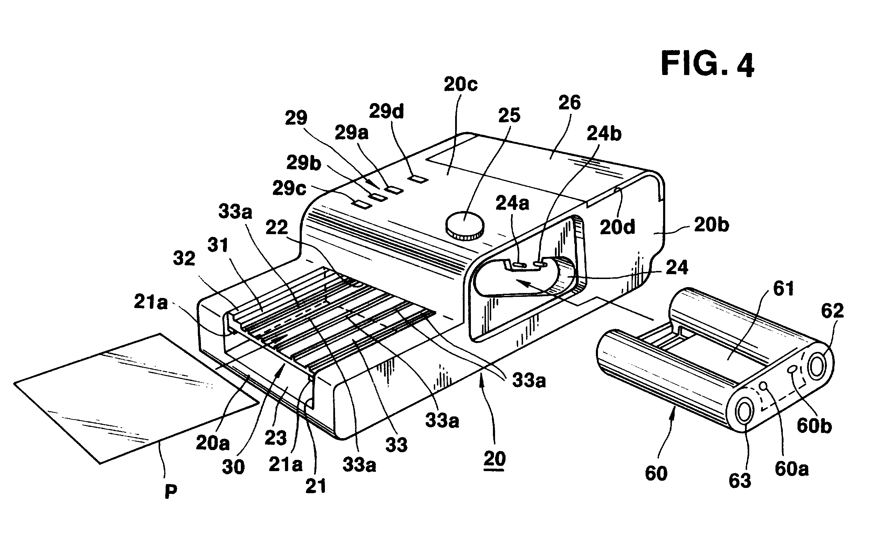

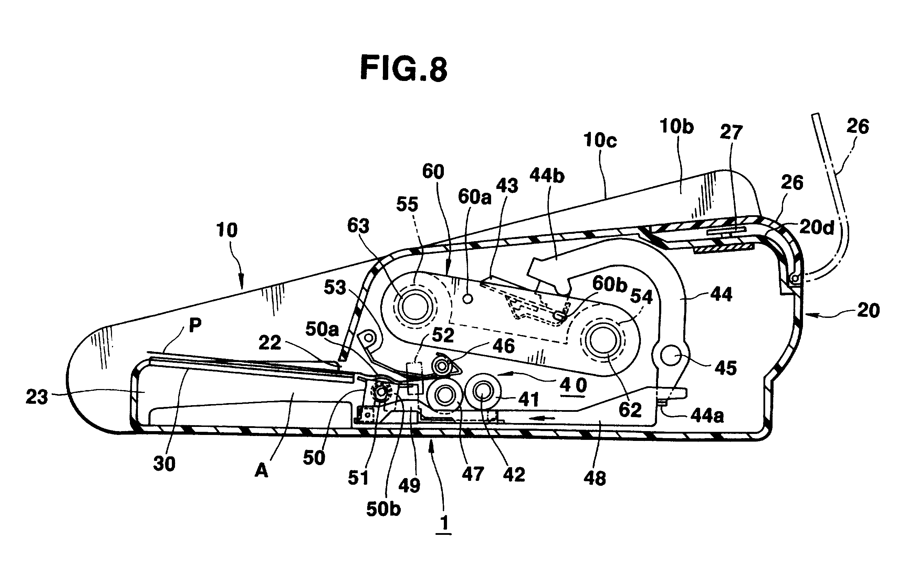

As shown in Figs. 4 and 8, the printing portion 20 is formed of synthetic resin so as to have an essentially rectangular configuration. A cutout port 21 is formed at the front portion of the printing portion 20 so as to extend along the lengthwise direction of the printing portion 20 from a front wall 20a thereof. A paper entrance 22 to supply a paper P to inside of the printing portion 20 and a paper exit 23 to exit the paper P printed are respectively arranged at the upper and the lower of the cutout port 21.

A cassette entrance 24 to insert an ink ribbon cassette 60 is opened at the left side wall 20b of the printing portion 20. A printing station 40 for accomplishing the printing is housed in the printing portion 20. A paper feeding area A for feeding the paper P is defined by the paper entrance 22, the printing station 40 and the paper exit 23. The ink ribbon cassette 60 is housed in the printing portion 20 from the cassette entrance 24, then covering means (not shown in the figures) covers the opening of the entrance 24 so as not to expose the ink ribbon cassette.

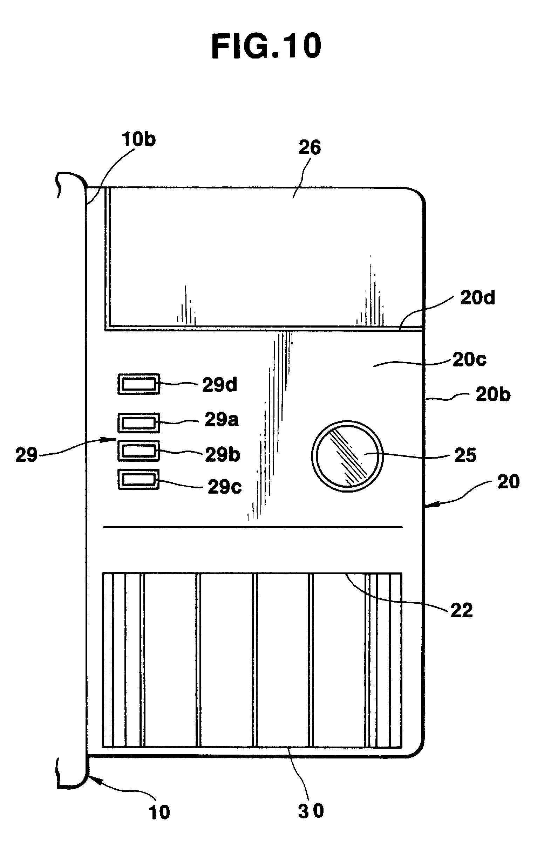

Referring now to Figs. 10 to 12, printing control switches are arranged on the upper surface 20c of the printing portion 20. A printing start switch 25 is arranged on the center right of the surface 20c. A color designating switch 27 and a brightness designating switch 28 are rotatably projected from an exposable surface of a cutout port 20d closably formed on the rear portion of the upper surface 20c by a switch cover 26 formed of synthetic resin. Combination of an elementary colors of ink ribbons 61Y (yellow), 61M (magenta) or 61C (cyan), i.e., one elementary color printing, two elementary colors printing, or three elementary colors (full colors) printing, is selected and designated by the color designating switch 27. Brightness of the printing, i.e., bright, average or dark, is selected and designated by the bright designating switch 28. Print condition indicators 29 are arranged on the upper surface 20c adjacent the side wall 10b of the drawing portion 10. The indicators 29 include a yellow printing LED 29a, a magenta printing LED 29b, and a cyan printing LED 29c, which light or flash during printing the color of Y, M or C, respectively. The indicators 29 also include a ribbon alarm LED 29d which is lighting or flashing when the ink ribbon cassette 60 is not inserted or abnormality of the ink ribbon cassette 60, e.g., the ink ribbon 61 has been consumed, is detected.

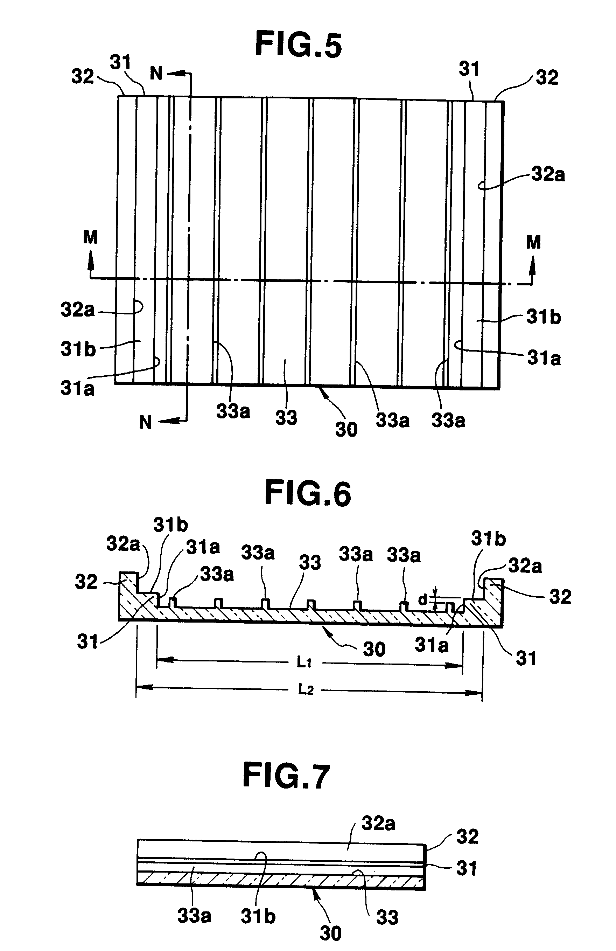

Referring again to Fig. 4, a paper supply guide 30 to guide the printing paper P manually inserted from the paper entrance 22 toward the printing station 40 is set at the position between the paper entrance 22 and the paper exit 23 of the cutout port 21 of the printing portion 20. The paper supply guide 30 has an approximate rectangular plate configuration formed of transparent synthetic resin, and detachably mounted on a pair of flange portions 21a projected from midposition of both side walls of the cutout port 21. Furthermore, referring to Figs. 5 to 7, the paper supply guide 30 has a cross sectional configuration of which lower facing side walls 31 are marginally projected inwardly from upper facing side walls 32. A distance L₁ between the side surfaces 31a of the lower side walls 31 is determined between 100 mm to 102 mm corresponding to a size of a postal card having 100 mm wide. On the other hand, a distance L₂ between the side surfaces 32a of the upper side walls 32 is determined between 105 mm to 108 mm corresponding to a size of the printing paper P having 105 mm wide (A6 size in Japan). A plurality of ribs 33a are projected from a bottom surface 33 of the paper supply guide 30 being formed integral therewith to prevent adhesion of the paper so that each rib is parallel to the side surfaces 31a and 32a. The top surface of the rib 33a is formed lower than that 31b of the lower side walls 31 so that the distance d corresponding to about the thickness of the printing paper P is left therebetween. Preferably, d is determined to 0.5mm, or if each rib 33a is spaced to reduce frictional resistance against the paper, may be determined to 0mm. When the postal card or a plain paper having same size thereof is manually inserted in the paper supply guide 30, the card is sorted out by the side surfaces 31a of the side walls 31, then positioned on the center of the bottom surface 33 to slide on the ribs 33a. On the other hand, when the paper having 105 mm wide is manually inserted in the paper supply guide 30, the paper is guided by the side surfaces 32a of the side walls 32, then positioned on the center of the paper supply guide 30 to slide on the top surfaces 31b of the side walls 31 and the ribs 33a. The ribs 33a substantially prevent paper adhesion even if the printing paper P having 105 mm width is supplied.

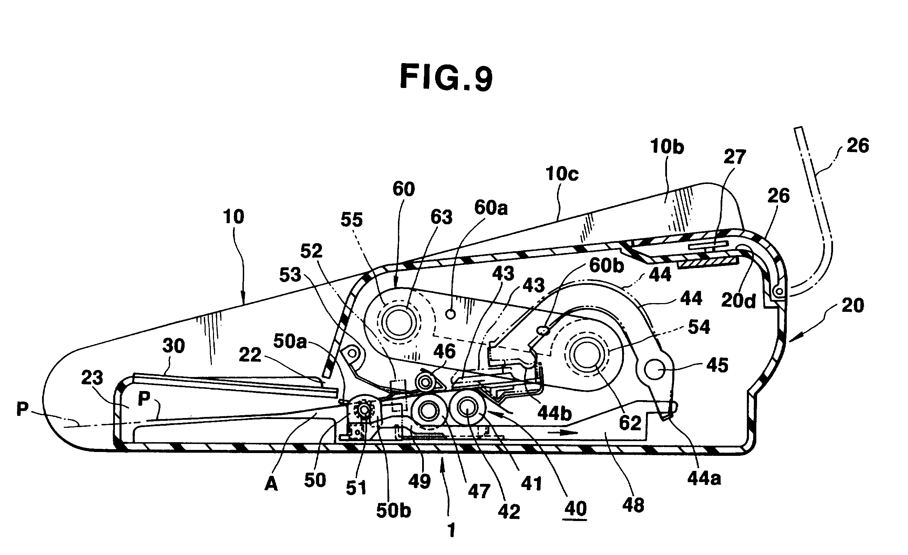

Referring now to Figs. 8 and 9, the printing station 40 housed in the printing portion 20 is composed of a platen 41 rotatably supported by a shaft 42 spaced parallelly apart from the front wall 20a of the printing portion 20, a head rod arm 44 upwardly apart from the platen 41 and oscilatably moved therefrom toward the platen 41, a head 43 toward and apart from the platen 41 via the head rod arm 44, a pinch roller 46 rotatably supported in front of the platen 41, a feed roller 47 contacting with the platen 41 to rotate, a link 48 connected to the head rod arm 44, a flap arm 49 connected to the link 48, a flapper 50 sorting the printing paper P from the paper entrance 22 toward the paper exit 23 via the link 48 and the flap arm 49 according to oscillation of the head rod arm 44 when printing, a paper exit roller 51 rotatably supported by a side margins 50b of the flapper 50, a printing paper detecting sensor 52 detecting the feeding condition of the paper P, and a paper pan 53 guiding the paper P to the area between the pinch roller 46 and the feed roller 47. The printing station 40 also includes a supply reel shaft 54 to rotate a supply reel 62 of the ink ribbon cassette 60 set in the printer portion 20 and a take-up reel shaft 55 to rotate a take-up reel 63 thereof.

The platen 41, the head rod arm 44, the pinch roller 46, and each reel shafts 54 and 55 are driven by driving means, such as a motor, not shown in the figures. The head rod arm 44 is oscillated via the shaft 44.

The link 48 and the flap arm 49 are always tensed toward a base portion 44a of the head rod arm 44 by a tension coil spring which is not shown. Thereby, when a head portion 44b of the head rod arm 44 is positioned apart upwardly from the platen 41, a top surface 50a of the flapper 50 is always located toward the direction of the paper exit 23. The ink ribbon 61 for thermal transfer printing of melting type is wound to the supply reel 62 and the take-up reel 63 in the ink ribbon cassette 60.

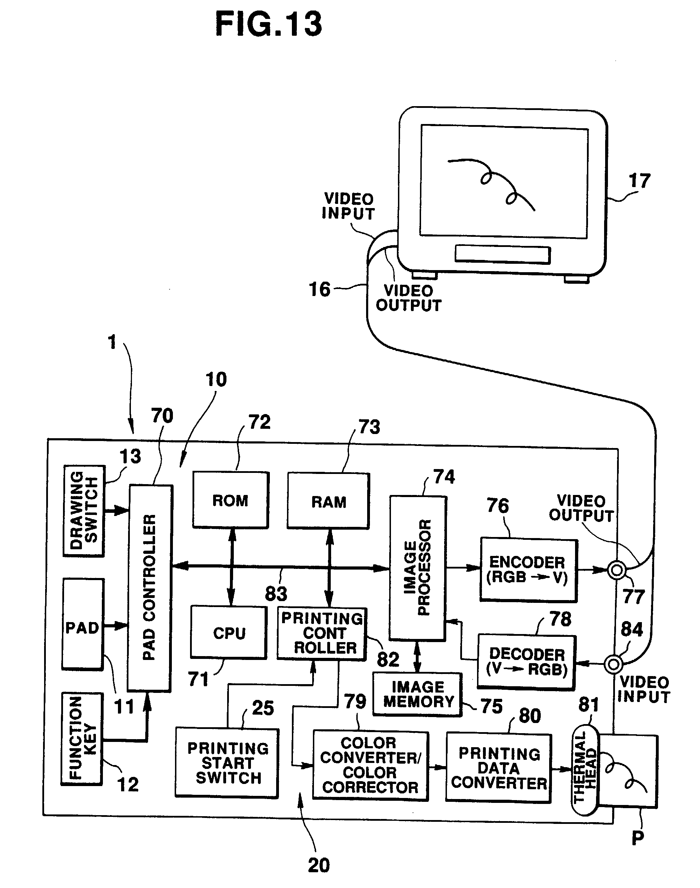

The circuit construction of the electronic drawing and printing apparatus 1 is described hereinbelow in detail on the basis of Fig. 13.

The electronic drawing portion 10 has a similar circuit as conventional electronic drawing device of the previously mentioned, i.e., a digitizing pad 11, function keys 12, and a drawing switch 13 are connected to a pad controller 70, the pad controller 70, a CPU 71, a ROM 72, a RAM 73 and an image processor 74 are connected to each other via a bus line, an image picture output from the image processor 74 having an image memory 75 is supplied to a monitor 17 via an NTSC encoder 76, a video output connector 77 and a video cable 16.

The printing portion 20 is composed of the image processor 74, the image memory 75, a decoder 78, a color converter/color corrector 79, a printing data converter 80, a thermal head 81, a printing start switch 25, and a printing controller 82. The printing start switch 25 is connected to the printing controller 82. The image processor 74 and the image memory 75 are shared by the drawing portion 10. The printing controller 82 is connected to the image processor 74 via the bus line 83 of the CPU 71 of the drawing portion 10. The printing controller 82 is also connected to the thermal head 81 via the color converter/color corrector 79, and the printing data converter 80. The CPU 71, the ROM 72, and the RAM 73 of the drawing portion 10 are also shared by the printing portion 20 for co-functioning. A video input connector 84 is connected to the video output of the monitor 17 via the video cable 16. In case of printing the image displayed on the monitor 17, an output video signal is converted to RGB signal and input to the image processor 74 via the video input connector 84 and the decoder 78.

The preferred embodiment of the electronic drawing and printing apparatus according to the present invention operates as follows.

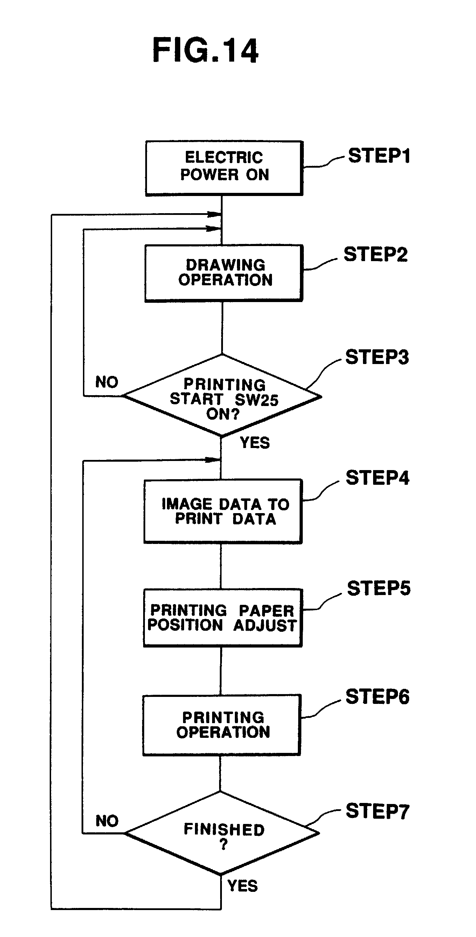

Referring now to Fig. 14, showing operation of the embodiment, i.e., a drawing routine is switched to a printing routine by the printing start switch 25, then again switched to drawing routine after printing. Firstly, when an electric source is ON (step 1), drawing step (step 2) is operated similar to that of conventional device, then the drawn image is memorized in the image memory 75 as a digital image data. When the printing start switch 25 is pressed (step 3), the data memorized in the image memory 75 are accessed by the CPU 71 to convert to printing data (step 4), then memorized in the RAM 73. The printing data memorized in RAM 73 are transferred by the CPU 71 to a printing controller 82 at every delimitation, e.g., every one line. At the printing controller 82, a printing position of the printing paper P is controlled by the motor (step 5), then the printing data are transferred to the thermal head 81 via the color converter/color corrector 79 and the printing data converter 80. The thermal head 81 is heated according to a command of thermal conversion given by a control signal from the CPU 71 to melt ink of the ribbon, then printing on the printing paper P is done (step 6). Thus, operations of steps 4 to 6 are continued until printing is finished (step 7). If the image displayed on the monitor 17 is printed, the NTSC color video output is memorized in the image memory 75 via the decoder 78 and the image processor 74, then printing is done via the printing controller 82 similar as the above-mentioned.

Accordingly, the drawing and printing apparatus 1 of the present invention does not require the memory 224, the D/A converter 228, and the encoder 229 which are generally installed in conventional electronic drawing device 200 and the printing device 210 shown in Fig. 1. Therefore, circuit construction can be simplified which allows manufacturing costs to be reduced. Furthermore, connection between the electronic drawing device 200 and the printing device 210 is no longer required. Therefore, operation for connection becomes easy. Additionally, comparing from conventional combination of the drawing device 200 and the printing device 210, the digital image data in the image memory 75 are utilized as printing data when the image displayed on the monitor is printed. Thus, conversion of the analog video signal to the digital image data is omitted. Therefore, deterioration of printing quality generally caused by digital to analog mutual conversion of the image data can be prevented.

According to the drawing and printing apparatus 1 of the present invention, the drawing portion 10 and the printing portion 20 is integrated, therefore, the picture signal drawn on the digitizing pad 11 of the drawing portion 10 by the drawing pen 14 is transferred to the monitor 17 to display thereon, concurrently, when the printing start switch 25 on the upper surface 20c of the printing portion 20 is pressed, the image displayed on the monitor 17, i.e., the data memorized in the image memory, are directly printed on the printing paper P via the printing station 40 without converting to the video signal.

The picture drawn by the drawing pen 14 is printed on the printing paper P as shown in Fig. 4.

Firstly, the ink ribbon cassette 60 in which the thermal transfer ink ribbon 61 of melting type is housed is set in the printing portion 20 from the cassette inlet port 24 thereof. Because of the uppermost position (stand-by position) of the head 43 of the printing station 40, as shown in Fig. 8, setting or detaching of the ink ribbon cassette 60 can be smoothly done. When setting the cassette 60, the cassette 60 is positioned on the side wall 20b of the printing portion 20 by engagement of a pair of positioning holes 60a and 60b formed in the cassette 60 with a pair of positioning pins 24a and 24b projected from the side wall 20b.

Secondly, referring again to Fig. 4, the printing paper P is inserted from the paper entrance 22 of the printing portion 20 along the surface of the paper supply guide 30. Referring now to Fig. 8 when the head 43 is positioned at the stand-by position, the link 48 and the flap arm 49 are moved by the head 43 via the head rod arm 44 toward the front direction of the printing portion 20. The top surface 50a of the flapper 50 is rotated thereby toward the direction apart from the paper pan 53. Therefore, if the printing paper P is inserted from the paper entrance 22, top margin of the paper P is inserted via the paper supply guide 30 until being pinched between the pinch roller 46 and the feed roller 47 which are contacted. Here, because a plurality of ribs 33a are projected from the bottom surface 33 of the paper supply guide 30, the paper P is not adhered on the bottom surface 33 of the guide 30 during insertion. When the printing start switch 25 is pressed, the paper P is automatically fed toward the platen 41, then printing is started.

When printing, referring to Fig. 9, the head 43 is contacted and pressed to the platen 41. The base portion 44a of the head rod arm 44 is moved toward the direction apart from the link 48. Therefore, the link 48 and the flap arm 49 are moved toward the rear direction of the printing portion 20 by the tension coil spring not shown. The top surface 50a of the flapper 50 is thereby rotated toward the direction adjacent the paper pan 53.

Once printing is started, each color of Y, M or C of the ink ribbon 61 in the ink ribbon cassette 60 is frame sequentially printed on the paper P according to selection by the printing color designation switch 27. The top margin of the paper P is passed between the lower portion of the top surface 50a of the flapper 50 and the paper exit roller 51 toward the lower portion of the paper supply guide 30 in the paper feeding area A. Thus, the paper P is reciprocated against the head 43 in the paper feeding area A between the lower portion of the ink ribbon cassette 60 and that of the guide 30 by sufficient times corresponding to the number of colors to be printed. During printing, as shown from solid lines of Figs. 3 and 9, the top margin of the paper P is not projected from the edge of the paper supply guide 30. Additionally, sequential printing of each color can be seen from the outside of the apparatus because the paper supply guide 30 is formed of transparent material.

When printing is finished, i.e., all colors designated are completely printed, the head 43 is slightly apart from the platen 41 as shown from chain lines of Figs. 3 and 9. The printed paper P is exited from the paper exit 23 via the pinch roller 46 and the paper exit roller 51 so that the top margin of the paper is slightly projected from the front wall 20a of the printing portion 20. Therefore, the printed paper can be easily taken out from the paper exit 23.

According to the present invention, the paper feeding area A during printing is shared by the paper exit 23 after printing. Therefore, construction of the printing portion 20 can be simplified and miniaturized allowing manufacturing cost to be reduced. Additionally, the paper entrance 22 and the paper exit 23 are formed in the upper and the lower portion of the paper feeding area A divided by means of the paper supply guide 30, and concurrently, the guide 30 is detachably installed to the cutout port 21 of the printing portion 20. Therefore, paper P jammed in the area A can be easily removed by detaching the guide 30. Further to say, repair of the printing station 40 can be easily done.

Thus, in the present invention, the electronic drawing portion 10 having the digitizing pad 11 where the image picture is input by means of the drawing pen 14 is integrated with the printing portion 20 for printing the image drawn on the pad 11. Therefore, when printing, connection of the video cable is no longer required. This allows the circuit for the video cable, number of connectors or such to be omitted. Thus, the drawing and printing apparatus is simplified, and a cost reduction is accomplished. Furthermore, the printing station 40 of the printing portion 20 can be partially housed in the opening space of the drawing portion 10 at the side wall 10b thereof. Thus, the apparatus can be miniaturized and thinned.

Further to say, the paper entrance 22 of the printing portion 20 is positioned lower at the front area of the printing portion 20. The upper surface 20c is inclined downwardly from the rear area toward the front area thereof. Therefore, print condition indicators 29, and control switches 25, 27 and 28 which are formed on adjacent the center portion of the upper surface 20c becomes easy to see and operate. The control switches can be housed in the opening space of the printing portion 20, by contrast with the position of the conventional control switches commonly formed in front of the printer. The upper surface 10c of the drawing portion 10 is also inclined downwardly from the rear area toward the front area thereof. Therefore, drawing operation on the pad 11 can be smoothly switched to printing operation. Additionally, design of each portion can be unified allowing the outer appearance of the apparatus 1 to be significantly improved.

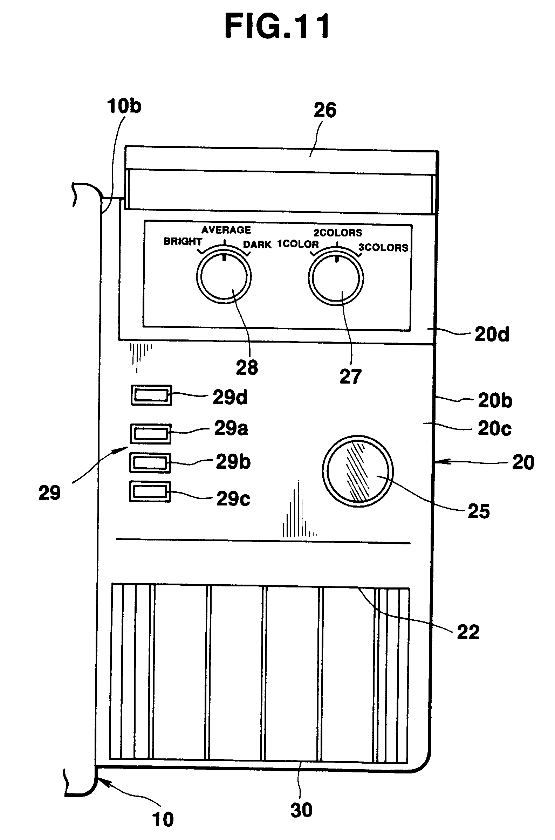

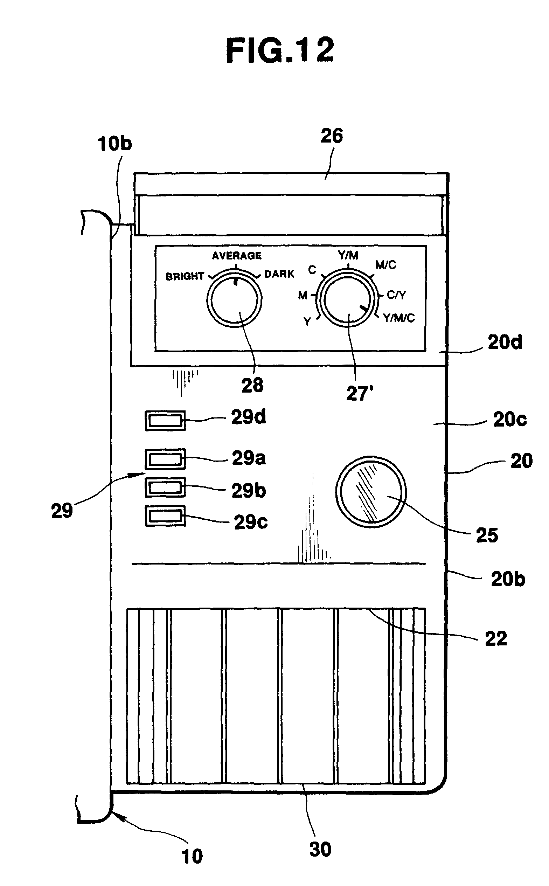

Furthermore, the ink ribbon cassette 60 is inserted from the cassette entrance 24 formed at the side surface 20b of the printing portion 20, and the paper P is manually inserted from the paper entrance 22 at the front wall 20a thereof. Therefore, paper housing space is no longer required allowing the construction of the apparatus 1 to be simplified. Accordingly, the miniaturization and cost reduction of the apparatus are still more promoted. Portability of the apparatus becomes highly improved. As an ink ribbon, a sublimation type of thermal transfer ink may be utilized. The printing portion may be integrated with any side of the drawing portion, and is not limited to the right side wall as shown in the figures. The color designation switch may be formed so that variety of combinations, such as Y, M, C, Y/M, M/C, C/Y, or Y/M/C, can be selected as shown in numeral 27' of Fig. 12 in place of the color designation switch 27 of the Fig. 11.

## Claims

1. A drawing and printing apparatus (1), comprising:
electronic drawing means (10) having manually operatable digitizing means (11) for drawing a picture and generating digital image data of the picture,
digital image data control means (71-73) coupled to said electronic drawing means,
printing means (20) coupled to said digital image data control means and installed in the same housing of the electronic drawing means for printing said picture based on said digital image data obtained from said electronic drawing means,
characterised in that it further comprises:
a video port means (77, 84) ) depending from said housing,
signal interface means (76, 78) connected between said image processing means (10) and said video port means for ensuring signal compatibility with a video apparatus (17) connected to said video port means,
and in that said digital data control means (71-73) further comprises a bus (83) for conveying said digital image data signal, said bus providing separate connection to both said printing means (20) and said interface means.

2. A drawing and printing apparatus as cited in claim 1, wherein said bus (83) is connected to said signal interface means (76, 78) via an image processor (74) having an image memory (75) associated therewith.

3. A drawing and printing apparatus as cited in claims 1 or 2, wherein said signal interface means comprises at least one of:
an encoder (76) for converting a digital data signal (RGB) obtained from said digital data control means (71-73) to a video output signal (V) compatible with a TV transmission standard and
a decoder (78) for converting a video signal (V) compatible with a TV transmission standard to a digital data signal (RGB) for said digital data control means (71-73).

4. A drawing and printing apparatus as cited in any one of claims 1 to 3, wherein said manually operatable digitizing means of said electronic drawing means includes a digitizing pad (11) having a predetermined drawing area.

5. A drawing and printing apparatus as cited in any one of claims 1 to 4, further comprising digital to analog converting means (76) for converting said digital image data into analog video signals suitable for displaying said digital data on a monitor display (17).

6. A drawing and printing apparatus as cited in claim 5, further comprising analog to digital converting means (8) for converting external analog video signals into digital image data suitable for printing said external analog video signals by said printing means (20).

7. A drawing and printing apparatus as cited in claim 6, further comprising image data memory means (75) for storing said digital image data from said electronic drawing means (10) and/or said digital image data from said analog to digital converting means (78).

8. A drawing and printing apparatus as cited in any one of clams 1 to 5, wherein said printing means (20) includes printing mechanism portion having a paper entrance (22) at the front of said printing mechanism portion and a ribbon cassette entrance (24) at the side of said printing mechanism portion.

9. A drawing and printing apparatus as cited in claim 8, wherein said printing means further includes print control switch means (26, 27) and print condition display means (29) on top of said printing mechanism portion.

10. A drawing and printing apparatus as cited in claim 9, wherein said printing means further includes a paper exit (23) under said paper entrance (22) and a transparent paper guide (30) inserted between said paper entrance and said paper exit.

11. A drawing and printing apparatus as cited in claim 8, wherein said printing mechanism portion of said printing means includes a thermal head (81) having a plurality of heating elements for thermal transfer printing.

## Patentansprüche

1. Zeichen- und Druckvorrichtung (1), aufweisend:
eine elektronische Zeicheneinrichtung (10) mit einer manuell betätigbaren Digitalisierungseinrichtung (11) zum Zeichnen eines Bildes und zur Erzeugung von digitalen Bilddaten des Bildes,
eine Digitalbilddaten-Steuereinrichtung (71-73), die mit der elektronischen Zeicheneinrichtung gekoppelt ist,
eine mit der Digitalbilddaten-Steuereinrichtung gekoppelte und in dem gleichen Gehäuse der elektronischen Zeicheneinrichtung installierte Druckeinrichtung (20) zum Drucken des Bildes basierend auf den von der elektronischen Zeicheneinrichtung erhaltenen digitalen Bilddaten,
**dadurch gekennzeichnet,** daß die Vorrichtung ferner aufweist:
eine von dem Gehäuse wegführende Videoporteinrichtung (77, 84),
eine zwischen der Bildverarbeitungseinrichtung (10) und der Videoporteinrichtung verbundene Signalschnittstelleneinrichtung (76, 78) zur Sicherstellung einer Signalkompatibilität mit einem mit der Videoporteinrichtung verbundenen Videogerät (17),
und dadurch, daß die Digitaldaten-Steuereinrichtung (71-73) ferner einen Bus (83) zur Übertragung des Digitalbilddatensignals aufweist, wobei der Bus eine separate Verbindung sowohl zu der Druckeinrichtung (20) als auch der Schnittstelleneinrichtung herstellt.

2. Zeichen- und Druckvorrichtung gemäß Anspruch 1,
wobei der Bus (83) mit der Signalschnittstelleneinrichtung (76, 78) über einen Bildprozessor (74) verbunden ist, dem ein Bildspeicher (75) zugeordnet ist.

3. Zeichen- und Druckvorrichtung gemäß Anspruch 1 oder 2,
wobei die Signalschnittstelleneinrichtung wenigstens eines des folgenden aufweist:
einen Codierer (76) zur Umwandlung eines von der Digitaldaten-Steuereinrichtung (71-73) erhaltenen Digitaldatensignals (RGB) in ein mit einem TV-Übertragungsstandard kompatibles Video-Ausgangssignal (V), und
einen Decoder (78) zur Umwandlung eines mit einem TV-Übertragungsstandard kompatiblen Videosignals (V) in ein Digitaldatensignal (RGB) für die Digitaldaten-Steuereinrichtung (71-73).

4. Zeichen- und Druckvorrichtung gemäß einem der Ansprüche 1 bis 3,
wobei die manuell betätigbare Digitalisierungseinrichtung der elektronischen Zeicheneinrichtung ein Digitalisierungsfeld (11) mit einem festgelegten Zeichenbereich enthält.

5. Zeichen- und Druckvorrichtung gemäß einem der Ansprüche 1 bis 4,
ferner aufweisend eine Digital-Analog-Wandlereinrichtung (76) zur Umwandlung der Digitalbilddaten in zur Anzeige der Digitaldaten auf einer Bildschirmanzeige (17) geeignete Analogvideosignale.

6. Zeichen- und Druckvorrichtung gemäß Anspruch 5,
ferner aufweisend eine Analog-Digital-Wandlereinrichtung (8) zur Umwandlung von externen Analogvideosignalen in Digitalbilddaten, die geeignet sind zum Drucken der externen Analogvideosignale durch die Druckeinrichtung (20).

7. Zeichen- und Druckeinrichtung gemäß Anspruch 6,
ferner aufweisend eine Bilddaten-Speichereinrichtung (75) zur Speicherung der Digitalbilddaten von der elektronischen Zeicheneinrichtung (10) und/oder der Digitalbilddaten von der Analog-Digital-Wandlereinrichtung (78).

8. Zeichen- und Druckvorrichtung gemäß einem der Ansprüche 1 bis 5,
wobei die Druckeinrichtung (20) einen Druckmechanismusabschnitt mit einem Papiereingang (22) an der Vorderseite des Druckmechanismusabschnitts und eine Farbband-Kassettenöffnung (24) an der Seite des Druckmechanismusabschnitts aufweist.

9. Zeichen- und Druckvorrichtung gemäß Anspruch 8,
wobei die Druckeinrichtung ferner eine Drucksteuerschalteinrichtung (26, 27) und eine Druckzustandsanzeigeeinrichtung (29) an der Oberseite des Druckmechanismusabschnitts aufweist.

10. Zeichen- und Druckvorrichtung gemäß Anspruch 9,
wobei die Druckeinrichtung ferner einen Papierausgang (23) unter dem Papiereingang (22) und eine transparente Papierführung (30) zwischen dem Papiereingang und dem Papierausgang aufweist.

11. Zeichen- und Druckvorrichtung gemäß Anspruch 8,
wobei der Druckmechanismusabschnitt der Druckeinrichtung einen thermischen Kopf (81) mit mehreren Heizelementen zum Thermotransferdrucken enthält.

## Revendications

1. Appareil (1) de dessin et d'impression, comprenant :
un moyen électronique (10) de dessin comportant un moyen (11) de numérisation, pouvant être mis en oeuvre manuellement, destiné à dessiner une figure et à produire des données d'image numériques de la figure ;
un moyen (71-73) de commande de données d'image numériques connecté audit moyen électronique de dessin ;
un moyen (20) d'impression, connecté audit moyen de commande de données d'image numériques, et installé dans le même boîtier que le moyen électronique de dessin, destiné à imprimer ladite figure en se basant sur lesdites données d'image numériques obtenues dudit moyen électronique de dessin,
caractérisé en ce qu'il comprend en outre :
un moyen (77, 84) d'accès vidéo dépendant dudit boîtier ;
un moyen (76, 78) d'interface de signaux, connecté entre ledit moyen (10) de traitement d'image et ledit moyen d'accès vidéo, destiné à assurer une compatibilité de signaux avec un appareil vidéo (17) connecté audit moyen d'accès vidéo ;
et en ce que ledit moyen (71-73) de commande de données numériques comprend en outre un bus (83) destiné à acheminer lesdits signaux de données d'image numériques, ledit bus fournissant une connexion séparée aussi bien vers ledit moyen (20) d'impression que vers ledit moyen d'interface.

2. Appareil de dessin et d'impression selon la revendication 1, dans lequel ledit bus (83) est connecté audit moyen (76, 78) d'interface de signaux par l'intermédiaire d'un processeur d'image (74) comportant une mémoire d'image (75) qui lui est associée.

3. Appareil de dessin et d'impression selon les revendications 1 ou 2, dans lequel ledit moyen d'interface de signaux comprend au moins l'un :
d'un codeur (76) destiné à convertir des signaux de données numériques (RGB), obtenus dudit moyen (71-73) de commande de données numériques, en signaux de sortie vidéo (V) compatibles avec une transmission de télévision classique, et
d'un décodeur (78) destiné à convertir des signaux vidéo (V) compatibles avec une norme de transmission de télévision classique en signaux de données numériques (RGB) destinés audit moyen (71-73) de commande de données numériques.

4. Appareil de dessin et d'impression selon l'une quelconque des revendications 1 à 3, dans lequel ledit moyen de numérisation, pouvant être mis en oeuvre manuellement, dudit moyen électronique de dessin comprend une tablette graphique (11) comportant une zone de dessin prédéterminée.

5. Appareil de dessin et d'impression selon l'une quelconque des revendications 1 à 4, comprenant en outre un moyen (76) de conversion de numérique en analogique destiné à convertir lesdites données d'image numériques en signaux vidéo analogiques appropriés pour affichage desdites données numériques sur un écran (17) d'affichage.

6. Appareil de dessin et d'impression selon la revendication 5, comprenant en outre un moyen (8) de conversion d'analogique en numérique destiné à convertir des signaux vidéo analogiques externes en données d'image numériques appropriées pour impression desdits signaux vidéo analogiques externes par ledit moyen (20) d'impression.

7. Appareil de dessin et d'impression selon la revendication 6, comprenant en outre un moyen (75) de mémorisation de données d'image destiné à mémoriser lesdites données d'image numériques provenant dudit moyen électronique (10) de dessin et/ou lesdites données d'image numériques provenant dudit moyen (78) de conversion d'analogique en numérique.

8. Appareil de dessin et d'impression selon l'une quelconque des revendications 1 à 5, dans lequel ledit moyen (20) d'impression comprend une partie mécanisme d'impression comportant une entrée (22) de papier à l'avant de ladite partie mécanisme d'impression, et une entrée (24) de cassette à ruban au niveau du côté de ladite partie mécanisme d'impression.

9. Appareil de dessin et d'impression selon la revendication 8, dans lequel ledit moyen d'impression comprend en outre un moyen (26, 27) formant interrupteur de commande d'impression et un moyen (29) d'affichage d'état d'impression sur la partie supérieure de ladite partie mécanisme d'impression.

10. Appareil de dessin et d'impression selon la revendication 9, dans lequel ledit moyen d'impression comprend en outre une sortie (23) de papier située sous ladite entrée (22) de papier, et un guide transparent (30) de papier inséré entre ladite entrée de papier et ladite sortie de papier.

11. Appareil de dessin et d'impression selon la revendication 8, dans lequel ladite partie de mécanisme d'impression dudit moyen d'impression comprend une tête thermique (81) comportant plusieurs éléments chauffants pour impression par transfert thermique.
